# EUROPÄISCHE PATENTSCHRIFT

(11) **EP 2 711 085 B1**
(45) Veröffentlichungstag und Bekanntmachung des Hinweises auf die Patenterteilung: **06.04.2016**
(21) Anmeldenummer: 13196591.5
(22) Anmeldetag: 28.07.2008
(51) Int. Cl.: B05B 7/24, F16L 37/252

(54) **Deckel einer Materialzuführungseinrichtung für eine Spritzpistole**
Lid of a material supply device for a spray gun
Couvercle d'un dispositif d'introduction de produit pour un pistolet pulvérisateur

(30) Priorität: 18.08.2007 DE 202007011604 U
(43) Veröffentlichungstag der Anmeldung: 26.03.2014
(62) Teilanmeldung aus: 08161273.1
(73) Patentinhaber: SATA GmbH & Co. KG, 70806 Kornwestheim (DE)
(72) Erfinder: Schmon, Ewald, Dr., 72661 Grafenberg (DE)
(74) Vertreter: Charrier, Rapp & Liebau

(56) Entgegenhaltungen:
- DE-A1-102004 003 438
- FR-A- 2 462 200

## Beschreibung

Die Erfindung betrifft einen Deckel einer Materialzuführungseinrichtung für eine Spritzpistole nach dem Oberbegriff des Anspruchs 1.

In der FR 2462200 A ist ein Farbbehälter für eine Farbspritzpistole beschrieben, welcher einen Becher und einen darauf aufsetzbaren Deckel aufweist, wobei am Rand des Bechers ein metallischer Ring angeordnet ist, der wenigstens zwei Rampen aufweist, welche zur Befestigung des Deckels am Becher mit einer gleichen Anzahl von Vorsprüngen zusammenwirkt, welche an der Innenseite eines Kragens an dem Deckel angeordnet sind. Die Rampen umfassen dabei jeweils einen ersten Abschnitt mit einer Steigung im Bereich von bspw. 30°, einen zweiten Abschnitt mit einer geringeren Steigung im Bereich von bspw. 4° und einen dritten Abschnitt, welcher als Sperrabschnitt wirkt und eine gegenläufige Steigung im Bereich von bspw. 12° aufweist. An den dritten Abschnitt schließt sich ein Widerlager an. Zur Festlegung des Deckels an dem Becher greifen die an der Deckelinnenseite angeordneten Vorsprünge zwischen dem dritten Abschnitt der Rampen und dem im Abstand dazu angeordneten Widerlager ein.

Aus der DE 10 2004 003 438 A1 ist ein als Spritzgussteil aus Kunststoff hergestellter Fließbecher für eine Farbspritzpistole bekannt, der einen becherförmigen Behälter und einen auf den Behälter aufsetzbaren Deckel umfasst. An dem Deckel ist zur unmittelbaren Befestigung des Fließbechers an einer Farbspritzpistole ein Anschlussteil angeformt, welches einen hohlzylindrischen Anschlussstutzen mit einem am Außenumfang dieses Anschlussstutzens umlaufendes Schraubkeilelement aufweist. Das Schraubkeilelement dient zur Herstellung einer Schraubkeilverbindung mit einem Gegenelement am Pistolenkörper der Farbspritzpistole. Durch Zusammenwirken des Schraubkeilelements mit dem Gegenelement am Spritzpistolenkörper kann der Fließbecher schnell und einfach mit der Spritzpistole verbunden und wieder von dieser gelöst werden. Damit beim Aufsetzen des Fließbechers auf die Farbspritzpistole die Schraubkeilverbindung nicht überdreht werden kann, ist am Ende des Schraubkeilelements ein Anschlagelement vorgesehen, welches beim Herstellen der Schraubkeilverbindung zwischen dem Fließbecher und der Farbspritzpistole einen Endanschlag bildet.

Da das Anschlussteil, wie der Deckel des Fließbechers, aus Kunststoff gefertigt ist und das Gegenelement am Spritzpistolenkörper aus Metall gefertigt ist, besteht bei dem bekannten Anschlussteil das Problem, dass sich - bedingt durch Fertigungstoleranzen -beim Herstellen der Schraubkeilverbindung das härtere Gegenelement in den demgegenüber weicheren Anschlussstutzen aus Kunststoff und insbesondere in das Schraubkeilelement eingräbt. Beim Lösen der Schraubkeilverbindung durch Zurückdrehen des Deckels vom Gegenelement kann ferner durch die Federelastizität des Kunststoffes ein Kunststoffspan an der Oberseite des Schraubkeilelements abgeschält werden. Dadurch wird zum einen das Schraubkeilelement beschädigt und bei jedem Aufsetzen des Fließbechers auf die Spritzpistole weiter abgetragen, was zu einem weniger festen Sitz des Fließbecherdeckels auf dem Spritzpistolenkörper führt. Zum anderen entstehen durch das Abtragen von Kunststoffmaterial am Anschlussstutzen aufgrund des Einschneidens des metallischen Gegenelements in das weiche Kunststoffmaterial Kunststoffspäne, welche beim Lackieren äußerst störend und unerwünscht sind, weil sie beispielsweise die zu lackierende Oberfläche verschmutzen oder die lackierte Oberfläche beschädigen können.

Hiervon ausgehend liegt der Erfindung die Aufgabe zugrunde, einen gattungemäßen Deckel mit Anschlussteil so zu verbessern, dass die erwähnten Nachteile nicht mehr auftreten können. Gelöst wird diese Aufgabe mit einem ein Anschlussteil aufweisenden Deckel mit den Merkmalen des Anspruchs 1. Bevorzugte Ausgestaltungen und Anwendungen des Deckels mit Anschlussteil sind den Unteransprüchen zu entnehmen.

Nachfolgend wird die Erfindung anhand eines Ausführungsbeispiels unter Bezugnahme auf die begleitenden Zeichnungen näher erläutert. Die Zeichnungen zeigen:
- **Figur 1a:**: Seitenansicht eines Farbbehälters für eine Farbspritzpistole, umfassend einen Farbbecher und einen darauf aufsetzbaren erfindungsgemäßen Deckel, der über ein Anschlussstück verfügt;
- **Figur 1b:**: Darstellung des Farbbehälters von Figur 1a im Schnitt;
- **Figur 1c:**: Schnittdarstellung des Anschlussteils des Farbbehälters von Figur 1a entlang der Linie B-B;
- **Figur 1d:**: Detailansicht des Anschlussstücks des Farbbehälters von Figur 1b im Querschnitt;
- **Figur 2a:**: Seitenansicht einer Farbspritzpistole und einem darauf aufgesetzten Farbbehälter gemäß dem Ausführungsbeispiel von Figur 1;
- **Figur 2b:**: Detaildarstellung der Verbindung zwischen dem Farbbehälter und der Farbspritzpistole von Figur 1a in einer Schnittdarstellung.
- **Figur 3a:**: Seitenansicht eines Fließbechers für eine Spritzpistole mit einem angeformten Anschlussstück in einer alternativen Ausführungsform und einer Querschnittsansicht im Bereich des Anschlussstücks (oben);
- **Figur 3b:**: Detailansicht des Anschlussstück des Fließbechers von Figur 3a;
- **Figur 4a:**: Seitenansicht eines Fließbechers für eine Spritzpistole mit einem angeformten Anschlussstück in einer weiteren alternativen Ausführungsform und einer Querschnittsansicht im Bereich des Anschlussstücks (oben);
- **Figur 4b:**: Detailansicht des Anschlussstück des Fließbechers von Figur 4a;

Das Anschlussteil des erfindungsgemäßen Deckels dient zur Verbindung einer Materialzuführungseinrichtung, auf welche der Deckel aufsetzbar ist, an eine Spritzpistole. Bei dem nachfolgend beschriebenen Ausführungsbeispiel handelt es sich bei der Materialzuführungseinrichtung um einen Farbbehälter für eine Fließbecher-Farbspritzpistole. Der erfindungsgemäße Deckel kann jedoch auch an anderen Materialzuführungseinrichtungen und für andere Arten von Spritzpistolen verwendet werden.

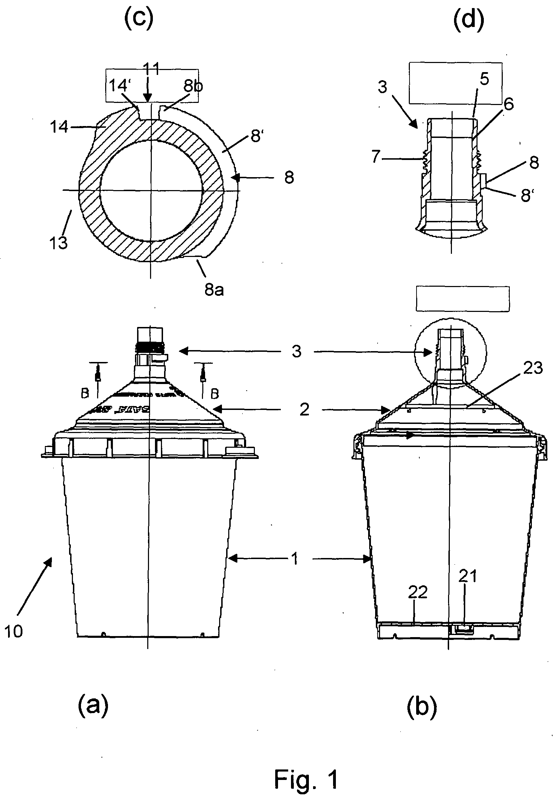

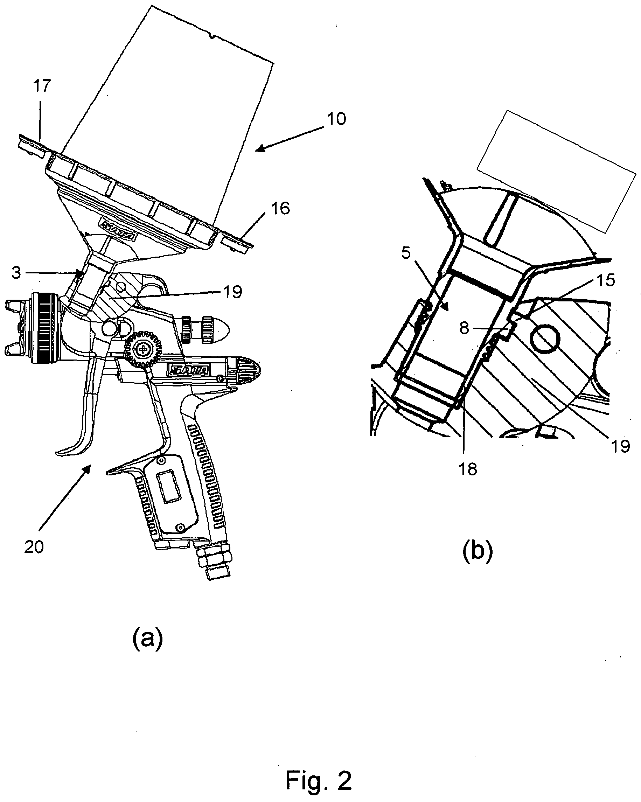

Der in Figur 1a in einer Seitenansicht dargestellte Fließbecher, der eine Materialzuführungseinrichtung 10 darstellt, enthält einen becherförmigen Behälter 1 und einen auf diesen aufsetzbaren Deckel 2, an dem ein Anschlussteil 3 zur lösbaren Befestigung des Fließbechers an einer Spritzpistole 20 angeformt ist. In Figur 2a ist eine Spritzpistole 20 mit einer darauf aufgesetzten Materialzuführungseinrichtung 10, nämlich dem in Figur 1a gezeigten Fließbecher, dargestellt. Sowohl der Behälter 1 als auch der Deckel 2 sind zweckmäßigerweise als Spritzgussteile aus Kunststoff hergestellt und das Anschlussteil 3, welches einen hohlzylindrischen Anschlussstutzen 5 umfasst, ist bevorzugt einstückig am Deckel 2 angeformt. Zum Befüllen mit einer zu verspritzenden Flüssigkeit wird der Deckel 2 vom Behälter 1 abgenommen und nach dem Befüllen wird der Deckel auf den Behälter 1 flüssigkeitsdicht aufgeschraubt. Anschließend kann der hohlzylindrischen Anschlussstutzen 5 des Anschlussteils 3 in die Anschlussbohrung 18 einer auf den Kopf gestellten Spritzpistole 20 flüssigkeitsdicht eingesetzt werden. Zum Verspritzen der in den Fließbecher eingefüllten Flüssigkeit wird dann die Spritzpistole 20 umgedreht, so dass sich der Fließbecher an der Oberseite der Farbspritzpistole befindet. In dieser Stellung kann die zu verspritzende Flüssigkeit aus dem Fließbecher durch den hohlzylindrischen Anschlussstutzen 5 in die Anschlussbohrung und den Spritzkanal der Spritzpistole 20 fließen.

Um eine Entlüftung des Fließbechers zu gewährleisten, ist im Boden 22 ein Belüftungsventil 21 vorgesehen. Das Belüftungsventil 21 ist nach dem Spritzvorgang wieder verschließbar, wodurch gewährleistet wird, dass der Fließbecher nach Beendigung des Spritzvorgangs von der Spritzpistole 20 abgenommen und zur Aufbewahrung der noch nicht verspritzen Flüssigkeit verwendet werden kann. Im Deckel 2 ist ein Sieb 23 vorgesehen, um die vom Fließbecher in die Spritzpistole fließende Flüssigkeit zu filtern.

Das in den Figuren 1c und 1d jeweils im Schnitt und vergrößert dargestellte Anschlussteil 3 besteht aus einem an dem Deckel 2 angespritzten oder anderweitig angeformten, hohlzylindrischen Anschlussstutzen 5. Der Anschlussstutzen 5 weist an seiner Außenseite einen vorderen zylindrischen Führungsbereich 6 und ein daran anschließendes Außengewinde 7 auf. Der Führungsbereich 6 dient zum zentrischen Einführen des Anschlussstutzens 5 in die in den Figuren 2a und 2b in der Schnittansicht gezeigten Anschlussbohrung 18 im Spritzpistolenkörper 19. Das Außengewinde 7 ist vorgesehen, damit das Anschlussteil 3 auch in ein konventionelles Innengewinde in der Bohrung 18 im Spritzpistolenkörper 19 einer Spritzpistole 20 eingeschraubt werden kann. Am Außenumfang des Anschlussstutzens 5 ist weiterhin ein an das Außengewinde 7 anschließendes und am Außenumfang des Anschlussstutzens 5 umlaufendes Schraubkeilelement 8 angeformt. Das Schraubkeilelement 8 hat die Form eines nur teilweise am Außenumfang des Anschlussstutzens 5 umlaufenden Außengewindegangs und weist bevorzugt ein Dreiecks- oder Trapezprofil auf. Bevorzugt verläuft das Schraubkeilelement 8 über weniger als die Hälfte des Umfangs des Anschlussstutzens 5. Das Schraubkeilelement 8 weist einen unteren Anfang 8a und ein oberes Ende 8b auf (Figur lc). Die in der Darstellung der Figur 1c und 1d gezeigte Unterseite des Schraubkeilelements 8 bildet eine Wirkfläche 8'. Das Schraubkeilelement 8 dient zur Herstellung einer Schraubkeilverbindung zwischen dem Anschlussteil 3 und dem Pistolenkörper 19 der Spritzpistole 20.

Zur Herstellung der Schraubkeilverbindung ist am Pistolenkörper 19 der Spritzpistole 20 ein Gegenelement 15 angeformt, welches bei dem in Figur 2 gezeigten Ausführungsbeispiel der Spritzpistole 20 durch einen einseitigen Ansatz oberhalb der Aufnahmebohrung 18 des Pistolenkörpers 19 gebildet ist. Bei dem Ansatz, der das Gegenelement 15 bildet, handelt es sich bevorzugt um einen keilförmigen Ansatz, dessen Dicke vom einen Ende zum anderen Ende kontinuierlich ansteigend zunehmen kann, der wie der Spritzpistolenkörper 19 aus Metall ist. Zum Herstellen der Schraubkeilverbindung wird die Wirkfläche 8' des Schraubkeilelements 8 in Eingriff mit dem Gegenelement 15 am Spritzpistolenkörper gebracht.

Wie sich aus der Schnittdarstellung der Figur 1c ergibt, ist in Umfangsrichtung im Abstand zum oberen Ende 8b des Schraubkeilelements 8 ein Anschlagelement 14 am Außenumfang des Anschlussstutzens 5 angeformt. Das Anschlagelement 14 weist eine dem oberen Ende 8b des Schraubkeilelements 8 gegenüberliegende Anschlagfläche 14' auf. Zwischen der Anschlagfläche 14' und dem oberen Ende 8b des Schraubkeilelements 8 ist demzufolge in Umfangsrichtung eine Lücke 11 gebildet. Das Anschlagelement 14 bildet damit ein vom Außenumfang des Anschlussstutzens 5 vorstehendes Widerlager, welches beim Eindrehen der Schraubkeilverbindung eine Drehbegrenzung des Anschlussteils 3 (und damit des Deckels 2) gegenüber dem Spritzpistolenkörper 19 bewirkt. Der Ansatz am Spritzpistolenkörper 19 kann jedoch auch ohne keilförmige Steigung versehen sein. Als alternative Ausführungsform, die hier zeichnerisch nicht dargestellt ist, kommt auch eine Ausführung in Betracht, bei der das Gegenelement 15 am Spritzpistolenkörper als keilförmiges Schraubkeilelement ausgebildet ist, welches mit einem entsprechenden Gegenelement am Anschlussstutzen 5 zusammenwirkt, wobei das Gegenelement am Anschlussstutzen 5 dann mit oder ohne keilförmige Steigung ausgebildet werden kann.

Zwischen dem unteren Ende 8a des Schraubkeilelements 8 und dem Anschlagelement 14 ist am Außenumfang des Anschlussstutzens 5 eine Aussparung 13 für den Eingriff des Gegenelements 15 an der Spritzpistole 20 vorgesehen. Zur Befestigung des Fließbechers an der Spritzpistole 20 wird das Anschlussteil 3 zunächst in einer Stellung in die Aufnahmebohrung 18 im Spritzpistolenkörper 19 eingeführt, in welcher das Gegenelement 15 in die Aussparung 13 am Anschlussstutzen 5 eingreifen kann. In dieser Stellung kann der Führungsbereich 6 des Anschlussstutzens in die Aufnahmebohrung 18 im Spritzpistolenkörper 19 eingeschoben werden, bis die Oberseite des Anschlussstutzens 5 an einer in der Aufnahmebohrung 18 angeordneten Dichtfläche, welche bspw. durch eine Ringdichtung gebildet werden kann, anliegt. Anschließend kann durch eine Drehung des Anschlussteils 3 bzw. des daran angeformten Deckels 2 gegenüber dem Spritzpistolenkörper 19 das Schraubkeilelement 8 zur Herstellung der Schraubkeilverbindung in Eingriff mit dem Gegenelement 15 am Spritzpistolenkörper 19 gebracht werden.

Die Erstreckung des Schraubkeilelements 8 in Umfangsrichtung ist bevorzugt so ausgewählt, dass bereits bei einer viertel bis halben Umdrehung des Anschlussstutzens 5 die Wirkfläche 8' am Schraubkeilelement 8 mit einer entsprechenden Gegenfläche am Gegenelement 15 zur Anlage kommt, wodurch der Anschlussstutzen 5 kraftschlüssig am Pistolenkörper 19 festgeklemmt wird. Das Anschlagelement 14 verhindert dabei, dass das Anschlusssteil 3 gegenüber dem Spritzpistolenkörper 19 überdreht werden kann, denn es bildet beim Zudrehen der Schraubkeilverbindung einen drehbegrenzenden Anschlag, wenn das Gegenelement 15 an der Anschlagfläche 14' zur Anlage kommt. Aufgrund der Lücke 11 zwischen dem oberen Ende 8b des Schraubkeilelements 8 und der Anschlagfläche 14' des Anschlagelements 14 kann sich das Gegenelement 15 auch dann, wenn aufgrund von Fertigungstoleranzen die Steigung des Schraubkeilelements 8 oder die Lage (Verspannung) des Schraubkeilelements etwas größer als vorgesehen sein sollte, das harte Gegenelement 15 nicht in den weichen Kunststoff des Anschlussstutzens 5 bzw. des federelastischen Schraubkeilelements 8 eingraben bzw. einfräsen und Späne vom Anschlussstutzens 5 bzw. vom Schraubkeilelement 8 abtragen. Bevorzugt ist die Lücke 11 am Umfang des Anschlussstutzen 5 in Umfangsrichtung schmäler als die Erstreckung des Gegenelements 15 in Umfangsrichtung und besonders bevorzugt ist die Umfangserstreckung des Gegenelements 15 etwa vier- bis zehnmal so breit wie die Breite der Lücke 11.

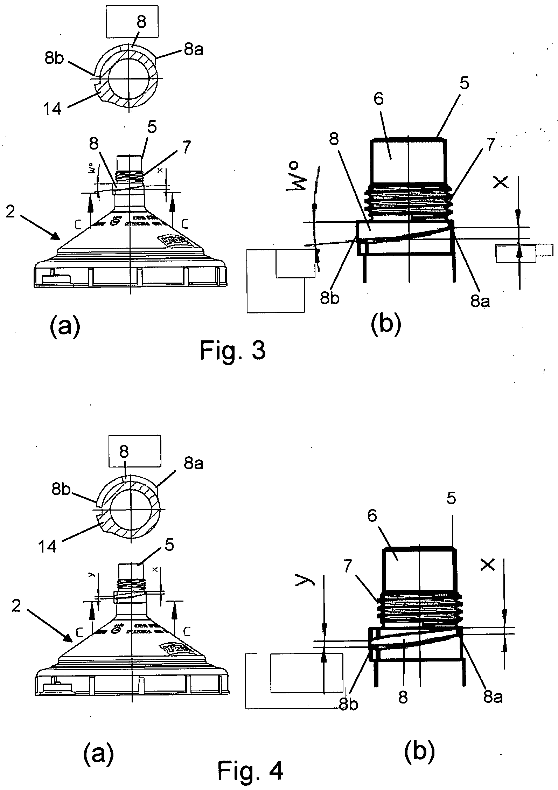

In Figur 4 ist ein Ausführungsbeispiel der Erfindung dargestellt, bei dem die Steigung des Schraubkeilelements 8 entlang des Umfangs des Anschlussstutzens 5 nicht linear ansteigend, sondern in Richtung des unteren Anfangs 8a des Schraubkeilelements 8 etwas steiler als im übrigen Bereich ausgebildet ist. Die Dicke des Schraubkeilelements 8, also dessen Erstreckung in axialer Richtung, ist dabei am unteren Anfang 8a und am oberen Ende 8b in etwa gleich groß, d. h. die Dicke y am oberen Ende 8b entspricht in etwa der Dicke x am unteren Anfang 8a (Figur 4b). Dadurch kann verhindert werden, dass beim Lösen der Schraubkeilverbindung Kunststoffspäne an der Wirkfläche 8' des Schraubkeilelements 8 abgeschält werden. Um auch beim Eindrehen des Schraubkeilelements 8 bei der Herstellung der Schraubkeilverbindung ein Einschneiden des Gegenelements 15 zu verhindern kann auch am oberen Ende 8b eine abgeflachte Steigung und/oder ein kleinerer Querschnitt als im mittleren Bereich vorgesehen sein.

Der gleiche Effekt kann auch durch einen kleineren Querschnitt des Schraubkeilelements 8 am unteren Anfang 8a in Axialrichtung erzielt werden. Dieses Ausführungsbeispiel der Erfindung ist in Figur 3 dargestellt, bei dem sich die Dicke des Schraubkeilelements 8 (also dessen Erstreckung in axialer Richtung) vom unteren Anfang 8a bis zum oberen Ende 8b kontinuierlich vergrößert. Am unteren Anfang 8a ist dabei die Steigung des Schraubkeilelements 8 größer als im mittleren Bereich.

## Patentansprüche

1. Deckel (2) einer Materialzuführungseinrichtung (10) für eine Spritzpistole (20), wobei die Materialzuführungseinrichtung (10) einen becherförmigen Behälter (1) und den auf diesen aufsetzbaren Deckel (2) enthält, mit einem am Deckel (2) angeformten Anschlussteil (3) zur lösbaren Befestigung des Deckels (2) an einem Pistolenkörper (19) der Spritzpistole (20), wobei das Anschlussteil (3) umfasst:
- einen hohlzylindrischen Anschlussstutzen (5),
- ein am Außenumfang des Anschlussstutzen (5) umlaufendes Schraubkeilelement (8) mit einem unteren Anfang (8a) und einem oberen Ende (8b), welches zur Herstellung einer Schraubkeilverbindung mit einem am Pistolenkörper (19) der Spritzpistole (20) angeordneten Gegenelement (15) dient,
- und ein Anschlagelement (14), welches beim Herstellen der Schraubkeilverbindung einen Endanschlag bildet,
**dadurch gekennzeichnet, dass** das Anschlagelement (14) in Umfangsrichtung im Abstand zum oberen Ende (8b) des Schraubkeilelements (8) angeordnet ist, wodurch zwischen dem Anschlagelement (14) und dem oberen Ende (8b) des Schraubkeilelements (8) eine Lücke (11) gebildet wird.

2. Deckel nach Anspruch 1, **dadurch gekennzeichnet, dass** die Steigung des Schraubkeilelements (8) am unteren Anfang (8a) steiler verläuft als im übrigen Bereich.

3. Deckel nach Anspruch 1, **dadurch gekennzeichnet, dass** das Schraubkeilelement (8) am unteren Anfang (8a) und/oder am oberen Ende (8b) in Axialrichtung einen kleineren Querschnitt aufweist als in seinem mittleren Bereich.

4. Deckel nach einem der Ansprüche 1 bis 3, **dadurch gekennzeichnet, dass** das Schraubkeilelement (8) als vom Anschlussstutzen (5) vorstehendes Keilprofil und das Anschlagelement (14) als vom Anschlussstutzen vorstehendes Widerlager mit einer Anschlagfläche (14') ausgeführt ist.

5. Deckel nach einem der Ansprüche 1 bis 4, **dadurch gekennzeichnet, dass** das Schraubkeilelement (8) in Form eines nur teilweise am Außenumfang des Anschlussstutzens (5) umlaufenden Außengewindegangs ausgebildet ist.

6. Deckel nach einem der Ansprüche 1 bis 5, **dadurch gekennzeichnet, dass** der Anschlussstutzen (5) einen Führungsbereich (6) zur seitlichen Führung innerhalb einer Aufnahmebohrung (18) im Pistolenkörper (19) der Spritzpistole (20) enthält.

7. Deckel nach einem der Ansprüche 1 bis 6, **dadurch gekennzeichnet, dass** das Schraubkeilelement (8) eine kontinuierlich ansteigende Wirkfläche (8') zur Anlage an einer entsprechenden Gegenfläche des Gegenelements (15) enthält.

8. Deckel nach einem der Ansprüche 1 bis 7, **dadurch gekennzeichnet, dass** das Schraubkeilelement (8) ein Dreiecks- oder Trapezprofil aufweist.

9. Deckel nach einem der Ansprüche 1 bis 8, **dadurch gekennzeichnet, dass** zwischen dem unteren Anfang (8a) und dem oberen Ende (8b) des Schraubkeilelements (8) eine Aussparung (13) vorgesehen ist für das Einsetzen des Ausschlussteiles in den Pistolenkörper (19).

10. Deckel nach einem der Ansprüche 1 bis 9, **dadurch gekennzeichnet, dass** das Schraubkeilelement (8) über weniger als die Hälfte des Umfangs des Anschlussstutzens (5) verläuft.

11. Deckel nach einem der Ansprüche 1 bis 10, **dadurch gekennzeichnet, dass** der Anschlussstutzen (5) an seiner Außenseite einen vorderen zylindrischen Führungsbereich (6) und ein daran anschließendes Außengewinde (7) aufweist.

12. Farbspritzeinrichtung umfassend eine Farbspritzpistole (20) mit einem Pistolenkörper (19) und einer Materialzuführungseinrichtung (10) mit einem beckerförmigen Behälter (1) und einem an diesem aufsetzbaren Deckel (2) nach einem der Ansprüche 1 bis 11, **wobei** das Anschlussteil (3) aus Kunststoff ist und am Pistolenkörper (19) ein Gegenelement (15) angeordnet ist, welches aus Metall ist.

13. Farbspritzeinrichtung nach Anspruch 12, **dadurch gekennzeichnet, dass** das Gegenelement (15) der Farbspritzpistole (20) an einem einseitigen Ansatz oberhalb einer Aufnahmebohrung (18) im Pistolenkörper (19) angeordnet ist.

14. Farbspritzeinrichtung nach Anspruch 12 oder 13, **dadurch gekennzeichnet, dass** die Lücke (11) in Umfangsrichtung schmäler ist als die Erstreckung des Gegenelements (15) in Umfangsrichtung.

15. Farbspritzeinrichtung nach Anspruch 14, **dadurch gekennzeichnet, dass** die Erstreckung des Gegenelements (15) in Umfangsrichtung etwa 4 bis 10 mal breiter ist als die Breite der Lücke (11).

## Claims

1. Lid (2) of a material supply device (10) for a spray gun (20), wherein the material supply device (10) comprises a cup-shaped container (1) and the lid (2) which can be fitted onto the latter, with a connecting part (3) moulded on the lid (2) for detachable fastening of the lid (2) to a gun body (19) of the spray gun (20), wherein the connecting part (3) comprises:
- a hollow cylindrical connecting stub (5),
- a screw wedge element (8) running around the external circumference of the connecting stub with a lower start (8a) and an upper end (8b) which is used to produce a screw wedge connection with an opposing element (15) arranged on the gun body (19) of the spray gun (20),
- and a stop element (14) which forms an end stop when the screw wedge connection is produced,
**characterised in that** the stop element (14) is arranged a distance from the upper end (8b) of the screw wedge element (8) in the circumferential direction, through which a gap (11) is formed between the stop element (14) and the upper end (8b) of the screw wedge element (8).

2. Lid according to claim 1, **characterised in that** the pitch of the screw wedge element (8) at the lower start (8a) is steeper than in the remaining region.

3. Lid according to claim 1, **characterised in that** the screw wedge element (8) exhibits a smaller cross-section in the axial direction at the lower start (8a) and/or at the upper end (8b) than in its central region.

4. Lid according to one of claims 1 to 3, **characterised in that** the screw wedge element (8) is embodied in the form of a wedge profile protruding from the connecting stub (5) and the stop element (14) is embodied in the form of an abutment with a stop face (14') protruding from the connecting stub.

5. Lid according to one of claims 1 to 4, **characterised in that** the screw wedge element (8) is embodied in the form of an external thread running only partly around the external circumference of the connecting stub (5).

6. Lid according to one of claims 1 to 5, **characterised in that** the connecting stub (5) comprises a guide region (6) for lateral guidance inside a receiving bore (18) in the gun body (19) of the spray gun (20).

7. Lid according to one of claims 1 to 6, **characterised in that** the screw wedge element (8) comprises a continuously rising working face (8') for bearing on a corresponding opposing face of the opposing element (15).

8. Lid according to one of claims 1 to 7, **characterised in that** the screw wedge element (8) exhibits a triangular or trapezoidal profile.

9. Lid according to one of claims 1 to 8, **characterised in that** an opening (13) is provided between the lower start (8a) and the upper end (8b) of the screw wedge element (8) for inserting the connecting part into the gun body (19).

10. Lid according to one of claims 1 to 9, **characterised in that** the screw wedge element (8) extends over less than half of the circumference of the connecting stub (5).

11. Lid according to one of claims 1 to 10, **characterised in that** on its outside the connecting stub (5) exhibits a front cylindrical guide region (6) and an external thread (7) adjoining it.

12. Paint spraying device comprising a paint spray gun (20) with a gun body (19) and a material supply device (10) with a cup-shaped container (1) and a lid (2) which can be fitted onto the latter according to one of claims 1 to 11, wherein the connecting part (3) is made of plastic and an opposing element (15) which is made of metal is arranged on the gun body (19).

13. Paint spraying device according to claim 12, **characterised in that** the opposing element (15) of the paint spray gun (20) is arranged on a one-sided shoulder above a receiving bore (18) in the gun body (19).

14. Paint spraying device according to claim 12 or 13, **characterised in that** the gap (11) in the circumferential direction is narrower than the extension of the opposing element (15) in the circumferential direction.

15. Paint spraying device according to claim 14, **characterised in that** the extension of the opposing element (15) in the circumferential direction is roughly 4 to 10 times wider than the width of the gap (11).

## Revendications

1. Couvercle (2) d'un dispositif d'amenée de matériau (10) pour un pistolet de pulvérisation (20), sachant que le dispositif d'amenée de matériau (10) contient un contenant (1) en forme de pot et le couvercle (2) pouvant être posé sur ce dernier, comprenant une partie de raccordement (3) formée au niveau du couvercle (2) servant à la fixation amovible du couvercle (2) au niveau d'un corps de pistolet (19) du pistolet de pulvérisation (20), sachant que la partie de raccordement (3) comprend :
- une tubulure de raccordement (5) cylindrique creuse,
- un élément à clavette à visser (8) situé tout autour au niveau de la périphérie extérieure de la tubulure de raccordement (5), pourvu d'un début (8a) inférieur et d'une extrémité (8b) supérieure, qui sert à établir un assemblage à clavette à visser avec un contre-élément (15) disposé au niveau du corps de pistolet (19) du pistolet de pulvérisation (20),
- et un élément de butée (14), qui forme, lors de l'établissement de la liaison à clavette à visser, une butée d'extrémité,
**caractérisé en ce que** l'élément de butée (14) est disposé dans la direction périphérique à distance par rapport à l'extrémité (8b) supérieure de l'élément à clavette à visser (8), ce qui permet de former un interstice (11) entre l'élément de butée (14) et l'extrémité (8b) supérieure de l'élément à clavette à visser (8).

2. Couvercle selon la revendication 1, **caractérisé en ce que** la pente de l'élément à clavette à visser (8) s'étend davantage à pic au niveau du début (8a) inférieur que dans la zone restante.

3. Couvercle selon la revendication 1, **caractérisé en ce que** l'élément à clavette à visser (8) présente, au niveau du début (8a) inférieur et/ou au niveau de l'extrémité (8b) supérieure, dans la direction axiale, une section transversale plus petite que dans sa zone centrale.

4. Couvercle selon l'une quelconque des revendications 1 à 3, **caractérisé en ce que** l'élément à clavette à visser (8) est réalisé sous la forme d'un profil à clavette faisant saillie de la tubulure de raccordement (5), et **en ce que** l'élément de butée (14) est réalisé sous la forme d'un contre-palier faisant saillie de la tubulure de raccordement, pourvu d'une surface de butée (14').

5. Couvercle selon l'une quelconque des revendications 1 à 4, **caractérisé en ce que** l'élément à clavette à visser (8) est réalisé sous la forme d'un pas fileté extérieur s'étendant tout autour seulement en partie au niveau de la périphérie extérieure de la tubulure de raccordement (5).

6. Couvercle selon l'une quelconque des revendications 1 à 5, **caractérisé en ce que** la tubulure de raccordement (5) contient une zone de guidage (6) servant au guidage latéral à l'intérieur d'un alésage de réception (18) dans le corps de pistolet (19) du pistolet de pulvérisation (20).

7. Couvercle selon l'une quelconque des revendications 1 à 6, **caractérisé en ce que** l'élément à clavette à visser (8) contient une surface active (8') ascendante en continu servant à venir en appui contre une contre-surface correspondante du contre-élément (15).

8. Couvercle selon l'une quelconque des revendications 1 à 7, **caractérisé en ce que** l'élément à clavette à visser (8) présente un profil triangulaire ou trapézoïdal.

9. Couvercle selon l'une quelconque des revendications 1 à 8, **caractérisé en ce qu'**un évidement (13) est prévu entre le début (8a) inférieur et l'extrémité (8b) supérieure de l'élément à clavette à visser (8) en vue de l'insertion de la partie de raccordement dans le corps de pistolet (19).

10. Couvercle selon l'une quelconque des revendications 1 à 9, **caractérisé en ce que** l'élément à clavette à visser (8) s'étend sur moins de la moitié de la périphérie de la tubulure de raccordement (5).

11. Couvercle selon l'une quelconque des revendications 1 à 10, **caractérisé en ce que** la tubulure de raccordement (5) présente au niveau de son côté extérieur, une zone de guidage (6) cylindrique avant et un filetage extérieur (7) s'y raccordant.

12. Dispositif de pulvérisation de peinture comprenant un pistolet de pulvérisation de peinture (20) pourvu d'un corps de pistolet (19) et d'un dispositif d'amenée de matériau (10) pourvu d'un contenant (1) en forme de pot et d'un couvercle (2) pouvant être posé sur ce dernier, selon l'une quelconque des revendications 1 à 11, sachant que la partie de raccordement (3) est en matière plastique et qu'un contre-élément (15) est disposé au niveau du corps de pistolet (19), lequel contre-élément est en métal.

13. Dispositif de pulvérisation de peinture selon la revendication 12, **caractérisé en ce que** le contre-élément (15) du pistolet de pulvérisation de peinture (20) est disposé au niveau d'un épaulement sur un côté au-dessus d'un alésage de réception (18) dans le corps de pistolet (19).

14. Dispositif de pulvérisation de peinture selon la revendication 12 ou 13, **caractérisé en ce que** l'interstice (11) est plus étroit dans la direction périphérique que l'extension du contre-élément (15) dans la direction périphérique.

15. Dispositif de pulvérisation de peinture selon la revendication 14, **caractérisé en ce que** l'extension du contre-élément (15) est plus large environ de 4 à 10 fois dans la direction périphérique que la largeur de l'interstice (11).
